(19) Europäisches Patentamt / European Patent Office / Office européen des brevets

(11) **EP 2 050 225 B1**

(12) **FASCICULE DE BREVET EUROPEEN**

(45) Date de publication et mention de la délivrance du brevet:
**15.08.2018 Bulletin 2018/33**

(21) Numéro de dépôt: **06709231.2**

(22) Date de dépôt: **02.02.2006**

(51) Int Cl.:
*H04M 15/00* (2006.01)   *H04W 88/08* (2009.01)
*H04L 12/801* (2013.01)   *H04L 12/26* (2006.01)

(86) Numéro de dépôt international:
**PCT/FR2006/000239**

(87) Numéro de publication internationale:
**WO 2006/082320 (10.08.2006 Gazette 2006/32)**

(54) **PROCÉDÉ ET SYSTÈME DE CONTRÔLE LOCAL DE LA DIFFUSION D'UNE APPLICATION EN RÉSEAU SANS FIL PARTAGE**

VERFAHREN UND SYSTEM ZUR LOKALEN STEUERUNG DER VERTEILUNG EINER ANWENDUNG AUF EINEM GEMEINSAM BENUTZTEN DRAHTLOSEN NETZWERK

METHOD AND SYSTEM FOR LOCALLY CONTROLLING THE DISTRIBUTION OF AN APPLICATION ON A SHARED WIRELESS NETWORK

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.02.2005 FR 0501200**

(43) Date de publication de la demande:
**22.04.2009 Bulletin 2009/17**

(73) Titulaire: **Orange**
**75015 Paris (FR)**

(72) Inventeurs:
• **GILBERTAS, Claire**
**F-35830 Betton (FR)**
• **VENANT-VALERY, Sabrina**
**F-35770 Vern sur Seiche (FR)**
• **JEAN, Michel**
**F-35000 Rennes (FR)**

(74) Mandataire: **Cabinet Plasseraud**
**66, rue de la Chaussée d'Antin**
**75440 Paris Cedex 09 (FR)**

(56) Documents cités:
**WO-A-03/007115     US-A1- 2004 158 644**

• **GARG S ET AL: "Wireless access server for quality of service and location based access control in 802.11 networks" COMPUTERS AND COMMUNICATIONS, 2002. PROCEEDINGS. ISCC 2002. SEVENTH INTERNATIONAL SYMPOSIUM ON JULY 1-4, 2002, PISCATAWAY, NJ, USA, IEEE, 1 juillet 2002 (2002-07-01), pages 819-824, XP010595853 ISBN: 0-7695-1671-8**

**Description**

L'invention concerne un procédé et un système de contrôle local de la diffusion d'une application en réseau sans fil partagé, ou d'un service fourni par cette application, au niveau d'un point d'accès à ce réseau par un ou plusieurs noeuds mobiles ou terminaux mobiles.

A l'heure actuelle, les informations radio mises à la disposition des serveurs d'applications, ou de services fournis par ces applications, par les entités d'un réseau sans fil partagé telles que point d'accès, noeud mobile, routeur d'accès, sont essentiellement fournies par des mesures radio qui permettent de connaître :

- le taux d'occupation radio d'un point d'accès, toutes applications ou services confondus,
- les noeuds mobiles connectés et les débits de transmission de données que ces derniers utilisent.

Les informations précitées ne permettent toutefois pas de discriminer les débits de transmission de données utilisés par chaque type d'application ou de service transitant par un point d'accès.

En outre, ces informations sont remontées au niveau du réseau coeur pour utilisation ou exploitation en liaison avec des informations spécifiques aux noeuds mobiles, telles que souscription, liste de réseaux d'accès alternatif ou autres. Elles ne sont donc pas exploitables directement par les équipements locaux.

Pour une description plus détaillée de processus de remontée d'informations vers un réseau coeur, on pourra utilement se reporter aux documents ci-après de l'art antérieur :

- WO 03/047296 déposé en publié le 05/01/2003 au nom de France Télécom, lequel décrit un gestionnaire de mobilité de terminaux ou noeuds mobiles, permettant d'initier et guider l'exécution d'un protocole de transfert intercellulaire, désigné "handower" en anglais, à partir d'informations transmises par l'opérateur, le réseau et les noeuds mobiles. Le gestionnaire de mobilité précité est placé dans un réseau cellulaire et permet de choisir des cellules cibles en fonction des données radio mesurées et remontées par les noeuds mobiles, des données réseau, telles que chaque type de trafic, qualité de service et des données opérateur, relatives à l'exploitation, telles que profils d'abonnés, paramètres réseaux, seuils de déclenchement, état de fonctionnement des points d'accès ;
- IEEE P802.11k/D1.0 intitulé Radio Resource Measurement, publié en Juillet 2004, décrit l'utilisation d'informations de niveau 2, relatives au contrôle d'accès au support, informations MAC pour Medium Access Control et disponibles auprès du noeud mobile et du point d'accès.

Enfin, un mode et un module de calcul du taux ou charge d'occupation d'un réseau ont fait l'objet du texte de normalisation IEEE P802.11K/D1.0 précité. Ce mode et ce module de calcul sont à la base de nombreuses applications concernant la mobilité des noeuds mobiles et le choix du point d'accès lors de la connexion de l'un de ces derniers. D'autres exemples et modes de réalisation peuvent être trouvés dans le document GARG S ET AL: "Wireless access server for quality of service and location based access control in 802.11 networks", COMPUTERS AND COMMUNICATIONS, 2002. PROCEEDINGS. ISCC 2002. SEVENTH INTERNATIONAL SYMPOSIUM ON JUL Y 1-4, 2002, PISCATAWAY, NJ, USA,IEEE, 1 juillet 2002 (2002-07-01), pages 819-824, WO 03/007115 A, ou US 2004/158644 A1.

La présente invention est le fruit d'une approche sensiblement différente des développements antérieurs.

Elle a principalement pour objet de permettre la mise en oeuvre de politiques de gestion par un procédé de contrôle local de la diffusion d'applications autorisant la prise en compte, dans les algorithmes décisionnels des supports de la mise en oeuvre de ces processus, d'au moins les informations ci-après relatives aux réseaux sans fil partagé :

- le taux d'occupation des points d'accès par type d'application ou de service diffusé ou distribué, notamment les débits de transmission de données mis en oeuvre par chaque type d'application ;
- la localisation fine, au niveau point d'accès, de chaque noeud mobile, à partir de son adresse réseau, par mise en correspondance biunivoque entre une adresse réseau du noeud mobile, telle que l'adresse IP de ce dernier, et l'adresse réseau, par exemple l'adresse IP, ou l'adresse MAC, du point d'accès.

Ainsi, à partir des seules informations locales et en toute indépendance vis-à-vis du réseau coeur, la présente invention a pour objet de permettre le contrôle de l'acceptation ou du refus de la diffusion de toute application ou service, en fonction des types d'application ou de service déjà diffusés par un point d'accès déterminé.

Par exemple, la présente invention peut permettre l'acceptation de la diffusion d'une application ou service, même si le noeud d'accès du noeud mobile demandeur est très chargé, lorsque les types d'application ou service qui transitent simultanément par ce dernier sont susceptibles de supporter une réduction de débit de transmission.

L'objet de la présente demande est décrit en relation aux revendications indépendantes 1, 9, 13 ci-après. Des modes de réalisation détaillés sont décrits en relation aux revendications dépendantes.

Le procédé et le système objets de l'invention seront décrits en liaison avec les figures ci-après dans lesquelles :

- la figure 1 représente, à titre illustratif, un organigramme des étapes essentielles de mise en oeuvre du procédé objet de l'invention ;
- la figure 2a représente, à titre illustratif, un organigramme détaillé de mise en oeuvre de l'étape de calcul du taux de charge d'un point d'accès par type d'application, de la figure 1 ;
- la figure 2b représente, à titre illustratif, un organigramme détaillé du test de l'étape E et de l'application des règles de priorité, dans le cas d'une application ou service Best Effort selon la norme 802.11 b) et e) ;
- la figure 3a représente, à titre illustratif, le schéma d'un système de contrôle local de la diffusion d'une application en réseau sans fil partagé, conforme à l'objet de la présente invention ;
- la figure 3b représente, à titre illustratif, la succession des étapes de transmission entre les éléments constitutifs du système objet de la présente invention tel que représenté en figure 3a ;
- la figure 4 représente, à titre illustratif, l'architecture spécifique d'un point d'accès permettant la mise en oeuvre du procédé et du système de contrôle local de la diffusion d'une application en réseau sans fil partagé.

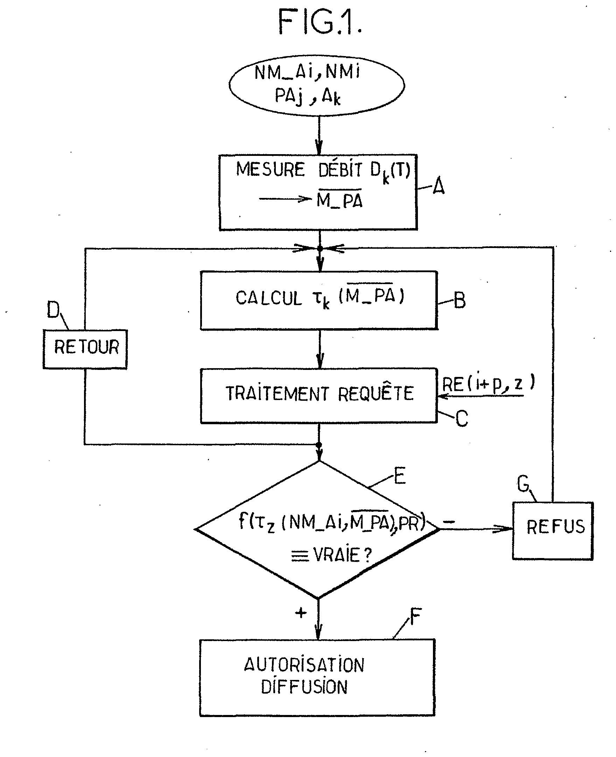

Une description plus détaillée du procédé de contrôle local de la diffusion d'une application au niveau d'un point local d'accès à un réseau sans fil partagé conforme à l'objet de la présente invention sera maintenant donné en liaison avec la figure 1 et les figures suivantes.

D'une manière générale, on considère un ou plusieurs noeuds mobiles $NM_i$ connectés à un réseau, tel que le réseau IP par exemple, par l'intermédiaire d'un point d'accès à un réseau sans fil partagé. Les réseaux sans fil partagés ont fait l'objet d'un texte de normalisation IEEE 802.11. Le point d'accès précité est noté $PA_j$ et est par exemple repéré par son adresse MAC, ainsi que mentionné précédemment dans la description.

Chaque type d'application susceptible d'être diffusée vers tout noeud mobile $NM_i$ par l'intermédiaire du point d'accès $PA_j$ est noté $A_k$.

En référence à la figure 1, on indique que le procédé objet de l'invention consiste à exécuter une étape A consistant à mesurer le débit des données transmises par le type d'application $A_k$ précité. L'opération précitée permet d'évaluer le débit moyen utilisé entre le point d'accès $PA_j$ et chacun des noeuds mobiles $NM_i$ ce débit moyen étant noté $\overline{M\_PA}$.

L'opération A est suivie d'une opération B consistant à calculer le taux de charge du point d'accès $PA_j$ par type d'application à partir d'au moins l'adresse réseau du noeud mobile et du débit moyen utilisé entre le point d'accès et le noeud mobile précité.

Sur la figure 1, le taux de charge du point d'accès par type d'application est noté :

$$\tau_k(\overline{M\_PA})$$

Dans l'annotation relative au taux de charge du point d'accès précité, $A_k$ désigne la référence au type d'application considéré.

L'étape B est alors suivie, par exemple, d'une étape C de veille de réception d'une requête de diffusion d'une nouvelle application au niveau du point d'accès $PA_j$, cette requête étant notée RE(i+p, z), z désignant une référence d'application appartenant à l'un des types d'application $A_k$.

Dans l'annotation relative à la requête précitée, i+p désigne l'adresse quelconque d'un noeud mobile $NM_{i+p}$ et z désigne l'indice d'une nouvelle application demandée par le noeud mobile $NM_{i+p}$.

La requête de demande de diffusion d'une nouvelle application peut alors être traitée de manière classique par vérification de l'habilitation à la connexion du noeud mobile $NM_{i+p}$ au point d'accès $PA_j$. Ce processus d'habilitation ne sera pas décrit en détail car il correspond à un processus connu de l'état de la technique.

L'étape C est alors suivie d'une étape D de retour au calcul du taux de charge du point d'accès $PA_j$ à l'étape B, compte tenu de la demande de diffusion de la nouvelle application. L'étape de retour est représentée par l'étape D Retour, prenant en compte la demande de la nouvelle application.

Après calcul du taux de charge du point d'accès par type d'application compte tenu de la requête de demande de diffusion de la nouvelle application, le procédé objet de l'invention consiste à exécuter une étape E consistant à autoriser respectivement refuser à partir de règles de priorité associées à chaque type d'application et en fonction du taux de charge du point d'accès, compte tenu de la demande de la nouvelle application, la diffusion de la nouvelle application sur le point d'accès $PA_j$ considéré.

Sur la figure 1, l'étape consistant à autoriser respectivement refuser la diffusion de la nouvelle application sur le point d'accès est représentée par une étape de test E sur la relation :

$$f(\tau_z(NM\_A_i, \overline{M\_PA}), PR) = \text{ vraie ?}$$

Dans la relation précédente, PR désigne l'ensemble des règles de priorité associées à chaque type d'application et

$$\tau_z(\mathrm{NM\_A_i}, \overline{\mathrm{M\_PA}})$$

désigne le taux de charge du point d'accès PA$_j$ pour l'application nouvellement demandée.

Sur réponse positive à l'étape de test E précitée, la diffusion de la nouvelle application demandée par l'intermédiaire du point d'accès PA$_j$ est alors autorisée à l'étape F.

Au contraire, sur réponse négative à l'étape de test sur la relation précitée à l'étape E, une étape de refus à l'étape G est appelée, laquelle est représentée symboliquement par le retour à l'étape B Refus et bien entendu le retour à l'état antérieur, c'est-à-dire à l'état d'autorisation de diffusion précédente compte non tenu de la nouvelle application demandée.

De manière plus spécifique, on indique que la mesure du débit de données transmises par type d'application débit désigné D$_k$(T) est effectuée périodiquement avec une période P au niveau du point d'accès PA$_j$ considéré. Cette mesure est effectuée par discrimination des types d'application en fonction de l'indice k désigné en ces dernières et bien entendu des typés de données et des structures de données qui transitent par le point d'accès lors de la diffusion des types d'applications considérés.

D'une manière plus particulière, on indique que la mesure du débit de données transmises par type d'application est transmise pour l'opération de calcul de taux de charge du point d'accès considéré sous forme de messages successifs comportant au moins les variables représentées au tableau 1 ci-après.

Tableau 1

| | | |
|---|---|---|
| Identifiant PA | PA$_j$ | Champ identifiant le Point d'Accès de manière unique dans la zone locale e.g. adresse MAC |
| Duree_ Mesure | T | Durée de mesure : durée permettant de prendre des mesures significatives de débit |
| Charge_ Canal | C_C | Pour chaque canal utilisé : estimation du niveau du canal radio pendant la période de mesure |
| Pour chaque mobile connecté au Point d'Accès | | |
| NM_Adresse | NM_A$_i$ | Adresse réseau e.g. IP du NM connecté au Point d'Accès |
| NM_ Modulation | NM_M | Modulation utilisée par le Point d'Accès lors de sa dernière communication avec le noeud mobile |
| Pour chaque type d'application (e.g. pour chaque file d'attente du Point d'Accès) : | | |
| Type_Service | T_S | Identifiant donnant le type d'application e.g. d'Accès dans le cas d'un Point d'Accès 802.11e |
| Modulation_ PA | $\overline{\mathrm{M\_PA}}$ | Moyenne des modulations utilisées par le Point d'Accès pendant la période de mesure (i.e. moyenne du débit radio) |
| Nb_Paquet_ Envoyé_TS | N_T_ P$_k$ | Nombre total de paquets envoyés aux NMs pour ce type d'application pendant la période de mesure |
| Nb_Paquet_ Reçu_TS | N_R_ P$_k$ | Nombre total de paquets reçus depuis les NMs pour ce type d'application pendant la période de mesure |
| Nb_Octets_ Envoyé_TS | N_T_B$_k$ | Nombre total d'octets envoyés aux NMs pour ce type d'application pendant la période de mesure |
| Nb_Octets_ Reçu_TS | N_R_B$_k$ | Nombre total d'octets reçus depuis les NMs pour ce type d'application pendant la période de mesure |
| *Bufer_Etat_ TS* | | *Taille du buffer radio pour ce type d'application* |
| *Bufer_Etat_ TS_Var* | | *Indicateurs de variation de la taille du buffer (mémoire) pendant la période de mesure* |

(suite)

| Pour chaque type d'application (e.g. pour chaque file d'attente du Point d'Accès) : | |
|---|---|
| Nb_Paquet_ jeté_TS | Nombre de paquets jetés pour ce type d'application |
| NM_ Connectés | Nombre de NMs connectés au Point d'Accès |
| Date_Mesure | Date de la mesure, permet de ne pas prendre en compte une mesure trop ancienne |
| Modulation_ PAS_max | Modulation maximale du Point d'Accès (i.e. débit radio maximal) |
| Nb_Paquet_ Envoyé | Nombre total de paquets envoyés aux NMs pendant la période de mesure |
| Nb_Paquet_ Reçu | Nombre total de paquets reçus depuis les NMs pendant la période de mesure |
| Nb_Octets_ Envoyé | Nombre total d'octets envoyés aux NMs pendant la période de mesure |
| Nb_Octets_ Reçu | Nombre total d'octets reçus depuis les NMs pendant la période de mesure |
| Bufer_Etat | Taille totale de tous les buffers radio |
| Bufer_Etat_ Var | Indicateurs de variation de la taille totale de tous les buffers radio pendant la période de mesure |
| Nb_Paquet_ jeté | Nombre de paquets jetés |

En référence au tableau 1 précité, on indique que les messages précités successifs comportent au moins :

- un champ d'identifiant unique du point d'accès dans la zone locale, c'est-à-dire en fait l'adresse MAC de ce dernier. Cette adresse correspond à l'adresse $PA_j$ précédemment mentionnée dans la description ;

- un champ représentatif de la période de mesure ou durée de mesure T et définie comme la durée permettant de prendre des mesures significatives de débit de transmission de données par le point d'accès $PA_j$ ;

- un champ représentatif, pour chaque canal radio utilisé, de l'estimation du niveau d'utilisation de ce canal radio pendant la période de mesure précitée ;

Pour chaque noeud mobile connecté au point d'accès $PA_j$ les messages successifs comportent en outre :

- un champ représentatif de l'adresse réseau du noeud mobile connecté au point d'accès ce champ étant noté $NM\_A_j$ ;
- un champ représentatif du mode de modulation utilisé par le point d'accès $PA_j$ lors de sa dernière communication avec le noeud mobile considéré, ce champ étant noté NM_M.

Pour chaque type d'application, les messages successifs comportent en outre ainsi que représenté au tableau 1 précité :

- un champ d'identification de type d'application T_S, ce champ correspondant en fait à la désignation de la catégorie d'accès dans le cas d'un point d'accès selon la norme 802.1 le précédemment mentionnée ;
- un champ représentatif de la moyenne des modulations utilisées par le point d'accès pendant la période de mesure pour ce type d'application, ce champ comprend la variable $\overline{M\_PA}$, cette variable désignant en fait la moyenne du débit radio transmis par le point d'accès $PA_j$ ;
- un champ représentatif du nombre total de paquets envoyés au noeud mobile pour ce type d'application pendant la période de mesure, ce champ étant noté $N\_T\_P_k$ ;
- un champ représentatif du nombre total de paquets reçus depuis les noeuds mobiles pour le type d'application considéré pendant la période de mesure, ce champ étant noté N_T_R$_k$ ;
- un champ représentatif du nombre total d'octets envoyés depuis les noeuds mobiles pour ce type d'application pendant la période de mesure, ce champ étant noté N_T_B$_k$ ;
- et un champ représentatif du nombre total d'octets reçus depuis les noeuds mobiles pour le type d'application considéré pendant la période de mesure, ce champ étant noté N_R_B$_k$.

Outre les champs précédemment cités, les messages successifs peuvent comporter avantageusement les champs optionnels mentionnés au tableau 1 en italique :

- un champ représentatif de la taille du buffer (mémoire) radio pour le type d'application considéré ;
- un champ représentatif des indicateurs de variation de la taille buffer (mémoire) pendant la période de mesure ;
- un champ représentatif du nombre de paquets rejetés pour l'application ou le type d'application considéré ;
- un champ représentatif du nombre de noeuds mobiles connectés au point d'accès PAj ;
- un champ représentatif de la date de la mesure, ceci afin de permettre de ne pas prendre en compte une mesure trop ancienne ;
- un champ représentatif de la modulation maximale du point d'accès, c'est-à-dire du débit de transmission radio maximum ;
- un champ représentatif du nombre total de paquets envoyés aux noeuds mobile pendant la période de mesure ;
- un champ représentatif du nombre total de paquets reçus depuis les noeuds mobiles pendant la période de mesure ;
- un champ relatif au nombre total d'octets envoyés aux noeuds mobiles pendant la période de mesure ;
- un champ relatif au nombre total d'octets reçus depuis les noeuds mobiles pendant la période de mesure ;
- un champ représentatif de la taille totale de tous les buffers radio ;
- un champ représentatif des indicateurs de variation de la taille totale de tous les buffers radio pendant la période de mesure ;
- un champ représentatif du nombre de paquets rejetés.

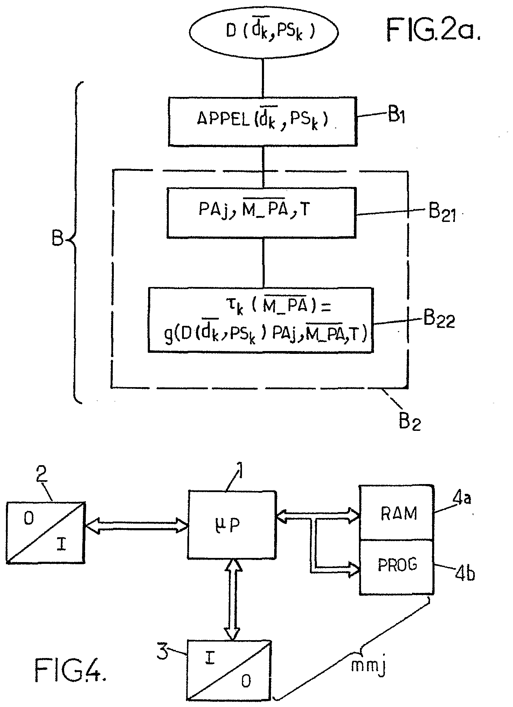

Une description plus détaillée de l'étape B de calcul du taux de charge du point d'accès par type d'application, à partir d'au moins l'adresse réseau du noeud mobile et du débit moyen utilisé entre le point d'accès et le noeud mobile considéré, étape B de la figure 1, sera maintenant donnée en liaison avec la figure 2a.

De manière particulièrement avantageuse, l'étape consistant à calculer le taux de charge du point d'accès par type d'application, conforme à l'objet de la présente invention, peut comprendre l'appel de données pré-requises mémorisées et comportant au moins des temps moyens de transmission radio par type d'application et la taille moyenne des paquets pour assurer la diffusion du type d'application considéré.

Sur la figure 2a, l'étape d'appel considérée est notée B$_1$ et les données pré-requises sont notées :

$$D(\overline{d_k}, \overline{PS_k})$$

Dans la notation précitée : d$_k$ désigne les temps moyens de transmission radio par type d'application, et $\overline{PS_k}$ désigne la taille moyenne des paquets transmis, paquets IP par exemple, pour assurer la diffusion du type d'application considéré.

L'étape B$_1$ est alors suivie d'une étape B$_2$ consistant en un calcul effectif et en la mémorisation d'une valeur d'estimation du taux de charge du point d'accès PA$_j$ pour la dernière période de mesure, à partir au moins de l'identifiant du point d'accès PA$_j$ ou adresse de ce dernier, de la moyenne des modulations utilisées par le point d'accès pendant la période de mesure $\overline{M\_PA}$ et de la période de mesure T définie comme la durée permettant de prendre des mesures significatives de débit. Les trois variables précitées identifiant du point d'accès PA$_j$, moyenne des modulations $\overline{M\_PA}$ et période de mesure T sont appelées à l'étape B$_1$ de la figure 2a pour en fait effectuer le calcul effectif à l'étape B$_2$ à partir des paramètres précités.

En outre, et selon une caractéristique du procédé objet de la présente invention, pour chaque noeud mobile, NM$_i$, l'étape de calcul effective et de mémorisation d'une valeur d'estimation du taux de charge comprend la mémorisation et la lecture du mode de modulation utilisé par le point d'accès lors de sa dernière communication avec le noeud mobile considéré.

Ainsi, on comprend que, pour le point d'accès PA$_j$ considéré, la lecture de l'adresse réseau du noeud mobile permet en fait une mise en correspondance biunivoque de l'adresse du point d'accès PA$_j$ et de l'adresse réseau, adresse IP du noeud mobile, adresse NM_A$_i$, ce qui permet d'assurer la localisation fine du noeud mobile considéré pour la mise en oeuvre locale du procédé objet de la présente invention au niveau du point d'accès considéré.

En outre, selon un mode de mise en oeuvre avantageux du procédé objet de la présente invention, l'étape de calcul effectif et de mémorisation d'une valeur d'estimation du taux de charge pour chaque type d'application comprend la mémorisation et la lecture des variables telles que décrites au tableau 2 ci-après.

Tableau 2

| Identifiant PA | $PA_j$ | Champ identifiant le Point d'Accès de manière unique dans la zone locale e.g. adresse MAC (cf. table 1) |
|---|---|---|
| Modulation_PA | $\overline{M\_PA}$ | Moyenne des modulations utilisées par le Point d'Accès pendant la période de mesure (i.e. moyenne du débit radio) - (cf. table 1) |
| Duree_Mesure | T | Durée de mesure : durée permettant de prendre des mesures significatives de débit (cf. table 1) |
| *Pour chaque mobile connecté au Point d'Accès* | | |
| NM_Adresse | $NM\_A_i$ | Adresse IP du $NM_i$ connecté au Point d'Accès (cf. table 1) |
| NM_Modulation | NM_M | Modulation utilisée par le Point d'Accès lors de sa communication avec le noeud mobile |
| *Pour chaque type de service (e.g. pour chaque file d'attente du Point d'Accès) :* | | |
| Type_Service | T_S | Identifiant donnant le type d'application (cf. table 1) e.g. Catégorie d'Accès dans le cas d'un Point d'Accès 802.11e |
| TS_Service_Charge | TS_S_C | Estimation du niveau de charge du Point d'Accès pendant la dernière période de mesure pour un type d'application |
| TS_Service_ Charge_Var | TS_S_ C_V | Indicateurs de variation de la charge du Point d'Accès entre la dernière mesure et la mesure précédente |
| Total_Service_ Charge | TS_C | Estimation du niveau de charge total du Point d'Accès pour toutes les applications pendant la dernière période de mesure i.e. somme de tous les TS Service Charge |
| Total_Service_ Charge_variation | TS_C_V | Indicateurs de variation de la charge totale des applications entre la dernière mesure et la mesure précédente |
| Charge_Canal | C_C | Pour chaque canal utilisé : estimation du niveau du canal radio pendant la dernière mesure (cf. table 1) |
| Charge_Canal_ variation | C_C_V | Indicateurs de variation de la charge du canal entre la dernière mesure et la mesure précédente |
| NM_Connectés | NM_N | Nombre de $NM_i$ connectés au Point d'Accès (cf. table 1) |
| Date_Mesure | M_Date | Date de la mesure, permet de ne pas prendre en compte une mesure trop ancienne (cf. table 1) |

Les variables précitées comprennent en particulier :

- l'identifiant de type d'application $A_k$, désigné T_S, c'est-à-dire un identifiant de catégorie d'accès lorsque le point d'accès est un point d'accès géré par la norme 802.11e ;

- la valeur d'estimation du niveau de charge du point d'accès $PA_j$ pendant la dernière période de mesure pour le type d'application considéré TS_S_C ;

- un indicateur de variation de la charge du point d'accès entre la dernière période de mesure et la période de mesure précédente TS_S_C_V ;

- une valeur d'estimation du niveau de charge total du point d'accès $PA_j$ pour l'ensemble des applications diffusées pendant la dernière période de mesure, valeur d'estimation TS_C, cette valeur d'estimation pouvant correspondre à la somme de l'estimation du niveau de charge du point d'accès pour chaque type d'application ;

- un indicateur de variation de la charge totale des applications entre la dernière période de mesure et la période de mesure précédente, indicateur TS_C_V ;

- le nombre de noeuds mobiles NM_N connectés au point d'accès PA_j considéré ;

- la date de la période de mesure, M_Date, ceci afin de permettre de ne pas prendre en compte une mesure trop ancienne.

Pour chaque canal de diffusion utilisé, canal radio par exemple, sont en outre prévues :

- une estimation du niveau d'utilisation du canal de diffusion pendant la dernière période de mesure, estimation notée C_C ;
- un indicateur de variation de la charge du canal de diffusion entre la dernière période de mesure et la mesure précédente, indicateur noté C_C_V.

A titre d'exemple non limitatif, l'estimation du niveau de charge du point d'accès PA_j pendant la dernière période de mesure pour un type d'application donné peut être obtenue par le rapport entre une estimation du temps de transmission de données pour l'application concernée et la durée de la mesure.

L'estimation du temps de transmission de données pour le type d'application considéré peut être obtenu à partir des variables telles que le nombre total d'octets reçus depuis les noeuds mobiles pour le type d'application considérée pendant la période de mesure, $N\_R\_B_k$, le nombre d'octets total envoyés aux noeuds mobiles, pour ce type d'application pendant la période de mesure, $N\_T\_B_k$, le nombre total de paquets envoyés respectivement reçus aux noeuds mobiles pour le type d'application considéré pendant la période de mesure, $N\_T\_P_k$ respectivement $N\_R\_P_k$, la moyenne des modulations utilisées par le point d'accès considéré PA_j pendant la période de mesure, c'est-à-dire la moyenne du débit radio $\overline{M\_PA}$ ainsi que des variables locales au point d'accès considéré PA_j, telles que par exemple le temps moyen de transmission des en-têtes radio et la taille moyenne des paquets pour le type d'application considéré.

Dans ces conditions, l'indicateur de variation de charge du point d'accès PA_j entre la dernière mesure et la mesure précédente peut être un indicateur prenant différentes valeurs en fonction du sens de variation de la charge du point d'accès considéré pour chaque type d'application considéré et en fonction de l'importance de cette variation de charge.

Un exemple non limitatif de calcul de l'estimation du taux de charge par application, variable TS_S_C du tableau 2 précité est indiqué pour un type d'application ou service Best-Effort selon la norme IEEE 802.11 b) et e).

La valeur de la variable TS_S_C désigne la valeur numérique du taux de charge $\tau_k(\overline{M\_PA})$ calculé à l'étape B de la figure 1.

Cette valeur numérique peut être prise égale à

$$TS\_S\_C = \frac{T_{AC} * 100}{T} \text{ où}$$

$$T_{AC} = \frac{Nb\ Bit}{\overline{M\_PA}} + Nb\ Paquet * (T_{SIFS} + T_{AIFS} + T_{pr} + T_{prh} + T_{back} + T_{ack})$$

Dans ces relation :

- $T_{AC}$ est une estimation du temps de transmission de données pour le type d'application ou service Best-Effort, et T désigne la durée de la mesure indiquée au tableau 1 ;
- $T_{SIFS}$, $T_{AIFS}$, $T_{pr}$, $T_{prh}$, $T_{back}$ et $T_{ack}$ sont des valeurs contenues dans un fichier de configuration contenu dans la base de données DBs, ces valeurs représentent des temps de transmission radio qui dépendent du type d'application et de la technologie radio utilisée ;
- Nb Bit = $(N\_T\_B_k + N\_R\_B_k) * 8$ ;
- Nb Paquet = $(N\_T\_Pk + N\_R\_P_k) * 8$ ;
- $\overline{M\_PA}$, $N\_T\_B_k$, $N\_R\_B_k$, $N\_T\_P_k$ et $N\_R\_P_k$ sont désignés au tableau 1.

Le taux de charge par application $\tau_k(\overline{M\_PA})$ = TS_S_C est donc une estimation du taux d'occupation du canal radio pour un type d'application ou de service.

Des valeurs d'indicateur du sens de variation du taux de charge par type d'application ou de service, TS_S_CV désigné au tableau 2, peuvent être calculées selon la répartition ci-après :

| Variation | TS_S_CV |
|---|---|
| Stable | 0 |
| Charge en augmentation modérée | 1 |
| Charge en augmentation forte | 2 |
| Charge en baisse modérée | 3 |
| Charge en baisse forte | 4 |

Lors de l'apparition d'une nouvelle demande d'application ou de service, étape C de la figure 1, l'étape de calcul de la charge ajoutée peut être exécutée, à titre d'exemple non limitatif, de la manière ci-après.

La charge ajoutée par le nouveau service

$$N\_S\_C = \tau_z(NM\_A_i, \overline{M\_PA}) - \tau_k(\overline{M\_PA}) = \frac{R\_RS_k + H\_R}{NM\_M}$$

Dans la relation précédente

- R_RS$_k$ désigne le débit requis pour la nouvelle application ou service demandée, cf. tableau 2 la valeur correspondante est fournie par le serveur d'application SA ;

$$H\_R = \frac{R\_RS_k}{P\_S} * H\_N$$

- H R désigne le débit en tête avec                                           où
- P_S désigne la taille des paquets de données, valeur configurée localement pour un type d'application ou service
- H_N : en tête réseau, désigne le nombre de bits ajoutés en tête de réseau, sous la couche service, en tête MAC, IP et UDP ou TCP.

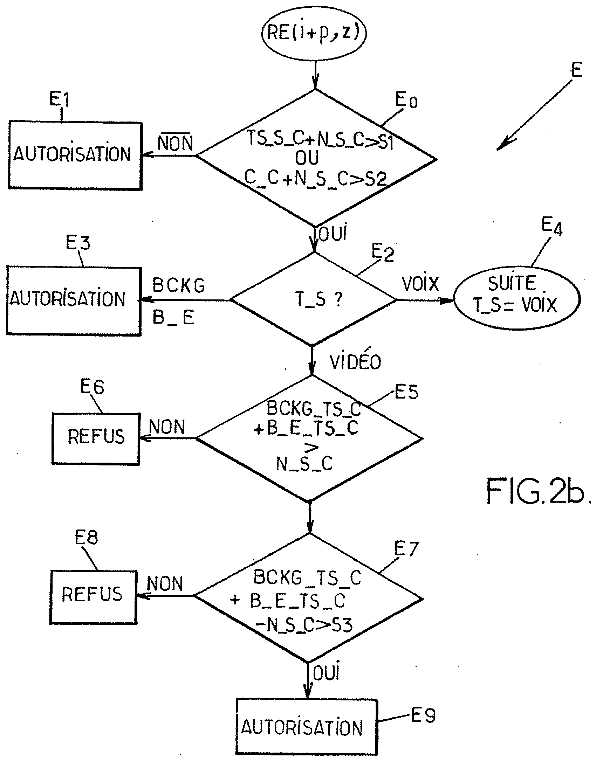

Un exemple non limitatif d'application des règles de priorité PR, c'est-à-dire en fait d'exécution de l'étape E de la figure 1, sera maintenant donné en liaison avec la figure 2b.

La figure 2b correspond à la situation selon laquelle une requête pour une nouvelle application RE(i+p, z) est introduite.

Dans l'exemple de la figure 2b, une nouvelle application correspondant à un type de service vidéo est acceptée si les trafics background BCKG et Best Effort B_E définis selon la norme IEEE 802.11 précitée peuvent supporter une réduction suffisante de bande passante, c'est-à-dire de débit sans descendre au-dessous d'un certain seuil prédéfini qui peut être pris égal à 10 %.

Le processus de vérification des règles PR de l'étape E est alors appliqué dans les conditions ci-après.

Si la nouvelle application demandée entraîne une charge de service du point d'accès considéré supérieure à une valeur de seuil prédéfinie notée S$_1$, S$_1$ pris égal à 80 % par exemple ou si l'application demandée entraîne une charge de canal supérieure à une valeur de seuil prédéfinie S$_2$, par exemple 100 %, alors on procède sur réponse négative aux inégalités ci-après :

$$TS\_S\_C + N\_S\_C > S_1$$

OU

$$C\_C + N\_S\_C > S_2$$

à la discrimination des types de service existants, ces types de service étant dans l'exemple donné égaux à 4 et désignés par Background, Best-Effort, vidéo et voix en référence à la désignation de la norme IEEE 802.11 précitée.

Sur réponse négative aux inégalités de l'étape 0 de la figure 2b alors une étape E$_1$ est appelée laquelle correspond à l'autorisation de la diffusion de l'application ou service demandé.

Au contraire, sur réponse positive à l'une des inégalités précitées, une étape E$_2$ est appelée laquelle consiste à discriminer le type de service effectivement demandé. Cette discrimination est notée

TS ?

A l'étape $E_0$ les variables TS_S_C et C_C sont définies au tableau 2 précédemment indiqué dans la description. La variable N_S_C est celle qui a été définie précédemment comme charge supplémentaire demandée par le nouveau service.

Lorsqu'en réponse au test $E_2$ l'application ou service demandé correspond soit à une application de type Bacground BCKG ou de type Best-Effort B_E, alors une étape 3 est appelée laquelle correspond à une autorisation de l'application demandée.

Si le type d'application discriminé à l'étape 2 correspond au type voix, alors une étape $E_4$ et appelée laquelle correspond à une suite de traitements pour une application de type voix.

Si finalement le type d'application ou service discriminé est de type vidéo en réponse au test de l'étape $E_2$ alors une étape $E_5$ est appelée mettant en jeu les valeurs de la variable TS_S_C désignée à la table 2 pour une application ou service de type Background, variable désignée BCKG_TS_C, respectivement pour un type d'application ou service Best-Effort variable désignée B_E_TS_C.

Le test de l'étape $E_5$ consiste alors à vérifier l'inégalité :

$$BCKG\_TS\_C + B\_E\_TS\_C > N\_S\_C$$

Sur réponse négative à l'inégalité précitée, une étape $E_6$ de refus est appelée la nouvelle application demandée n'étant pas soumise à diffusion.

Au contraire, sur réponse positive à l'inégalité précitée à l'étape $E_5$, une étape de test $E_7$ est appelée laquelle consiste alors à évaluer la différence de la somme des nouvelles charges BCKG_S_C + B_E_S_C et du supplément de charge de la nouvelle application NSC vis-à-vis du seuil $S_3$ précédemment mentionné. Le seuil $S_3$ précité est pris égal à 10 % par exemple.

Sur réponse négative au test $E_7$, l'inégalité

$$BCKG\_TS\_C + B\_E\_TS\_C - NSC > S_3$$

n'étant pas vérifiée, une étape $E_8$ de refus est appelée, la nouvelle application demandée n'étant pas diffusée.

Au contraire, sur réponse positive à l'inégalité précitée à l'étape $E_7$, alors une étape $E_9$ d'autorisation de la diffusion de la nouvelle application demandée est alors appelée.

Dans l'exemple précité illustré-en liaisons avec le figure 2b, on comprend que la décision finale prise au test de l'étape $E_7$ permet d'accepter la demande de nouvelle application car même si le point d'accès $PA_j$ est chargé, les services de type - Best-Effort et Background subissent un repli de bande passante ou de débit acceptable.

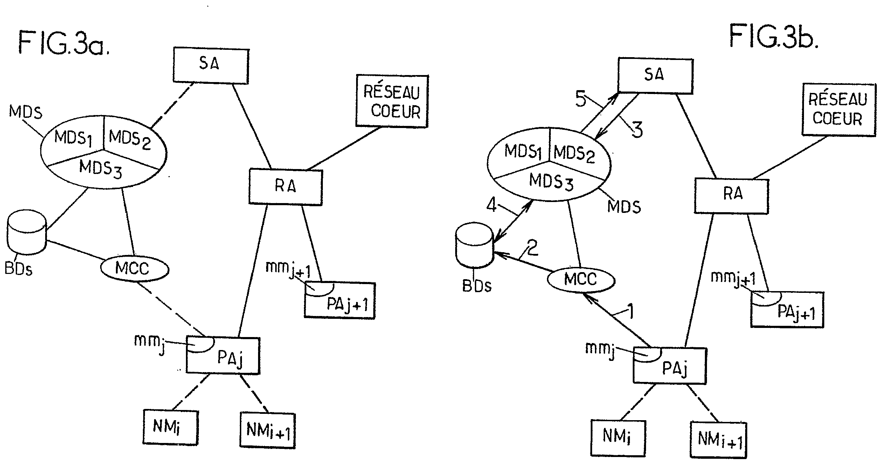

Une description plus détaillée d'un système de contrôle local de la diffusion d'une application au niveau d'un point d'accès à un réseau sans fil partagé, conforme à l'objet de la présente invention, sera maintenant donnée en liaison avec les figures 3a et 3b.

Sur la figure 3a, on a représenté, sous forme de schéma bloc, un système de contrôle de la diffusion d'une application conforme à l'objet de la présente invention. Une pluralité de noeuds mobiles $NM_i$, $NM_{i+1}$ est connectée à un point d'accès $PA_j$ par exemple, chaque noeud mobile étant repéré par une adresse réseau ainsi que mentionné précédemment dans la description. L'adresse réseau de chaque noeud mobile s'entend de l'adresse IP par exemple. Le réseau, tel qu'un réseau de type IP, comporte un serveur d'applications SA permettant de diffuser une pluralité d'applications sollicitées sur requête par un ou plusieurs des noeuds mobiles précités.

Chaque point d'accès $PA_j$, $PA_{j+1}$ est interconnecté au réseau coeur et au serveur d'applications SA.

Le serveur d'applications SA gère une ou plusieurs applications sollicitées par un ou plusieurs des noeuds mobiles. Il peut être local à la zone ou situé dans le réseau coeur par exemple.

Le système objet de l'invention comprend au moins, connectée au serveur d'application SA et aux points d'accès $PA_j$, $PA_{j+1}$ précité, une base de données d'applications notée $BD_s$ contenant un ensemble de données relatives aux types d'applications $A_k$ et bien entendu aux points d'accès $PA_j$ et $PA_{j+1}$ précités. Les informations contenues dans la base de données $BD_s$ comprennent par exemple des informations telles que un identifiant ou adresse du point d'accès de la zone $PA_j$, un identifiant réseau des noeuds mobiles présents sur chaque point d'accès, c'est-à-dire les adresses $NM\_A_i$ de ces derniers, les types d'applications utilisées, $A_k$, les caractéristiques de ces types d'applications telles que fiabilité des mesures ou autres.

Ainsi que représenté en outre en figure 3a, le système objet de l'invention comporte un module de calcul du taux de charge par type d'application, module noté MCC sur la figure précitée, ce module étant interconnecté à la base de données d'applications BD$_s$ et permettant la collecte et la transmission de données relatives aux applications et la mise à jour de la base de données d'application BD$_s$ à partir de ces dernières.

D'une manière générale, on indique que le module MCC est formé par une entité logique qui peut être intégrée dans le serveur d'applications SA, dans un routeur de zone RA représenté au dessin, dans le point d'accès PA$_j$ ou finalement dans toute entité du réseau spécifique.

Le système objet de l'invention comporte également un module de contrôle MDS, sur le point d'accès considéré PA$_j$, de la diffusion de l'application demandée en relation avec le serveur d'application SA, le module de contrôle MDS permettant d'assurer le contrôle de la diffusion par autorisation respectivement refus à partir de règles de priorité PR associées à chaque type d'application, en fonction du taux de charge et/ou de la variation du taux de charge du point d'accès pour toute demande de diffusion d'une nouvelle application.

D'une manière générale, on indique que le module de contrôle de la diffusion de l'application demandée MDS est constitué par une entité logique laquelle peut être intégrée dans le serveur d'applications SA ou dans le module de calcul de charge MCC par exemple.

Le module de contrôle de la diffusion de l'application demandée est interrogé par le serveur d'applications SA pour rendre une décision relative au contrôle d'admission d'une application en fonction de la charge existante pour le point d'accès considéré PA$_j$. Il intègre, d'une part, une logique de décision alimentée d'une part par les informations relatives à l'application demandée par l'un des noeuds mobiles connectés, les informations fournies par le serveur d'applications SA, et, d'autre part, la table de données BD$_s$ en ce qui concerne les informations relatives à la charge d'application des points d'accès. Le module de contrôle de la diffusion consulte la base de données d'application BD$_s$.

Enfin, le routeur d'accès RA assure la connection entre les noeuds mobiles NM$_i$ et le réseau coeur par l'intermédiaire des points d'accès, tel que le point d'accès PA$_j$.

Les points d'accès précités assurent l'attachement par liaison radio des noeuds mobiles NM$_i$ et sont connectés au routeur d'accès RA par exemple.

Dans le cadre de la mise en oeuvre du système objet de l'invention et du procédé objet de l'invention, les points d'accès PA$_j$ assurent la collecte d'informations radio/applications lesquelles sont envoyées au module de contrôle de la diffusion de l'application demandée MDS soit directement, soit par l'intermédiaire d'autres entités réseau tels que le routeur d'accès RA par exemple.

En outre, dans le cadre de la mise en oeuvre du procédé et du système objets de l'invention, un point d'accès PA$_j$, peut être configuré de manière à assurer, non seulement l'attachement de chaque noeud mobile considéré NM$_i$, mais également la surveillance des canaux radio pour collecter les informations radio/applications de tout point d'accès adjacent PA$_{j+1}$ par exemple.

Enfin, ainsi que représenté en figure 3a, chaque point d'accès PA$_j$ comporte un module de mesure et de collecte de données mm$_j$ relatives à la diffusion radio et à - chaque application susceptible d'être diffusée par le canal radio correspondant.

En référence à la figure 3a, le module de contrôle de la diffusion de l'application demandée, MDS, comporte au moins un premier module MDS1 de discrimination à partir des données contenues dans le serveur d'applications SA, en fonction de l'adresse réseau du noeud mobile, NM_A$_i$, du point d'accès PA$_j$ auquel le noeud mobile est connecté ainsi que du mode de modulation utilisé par le point d'accès lors de sa dernière communication avec le noeud mobile précité.

On indique que la discrimination du point d'accès PA$_j$ auquel le noeud mobile est connecté peut être réalisée à partir de la correspondance biunivoque précédemment mentionnée dans la description. En ce qui concerne la dernière modulation utilisée par le point d'accès, pour communiquer avec le noeud mobile considéré, on indique que ce paramètre est contenu dans le tableau 2 et désigné NM_M.

En référence à la même figure 3a, on indique que le module de contrôle MDS comporte en outre un module de calcul numérique MDS2 d'une valeur d'estimation de la charge ajoutée par la nouvelle application demandée. Cette valeur d'estimation peut être calculée en raison du débit de diffusion requis pour la nouvelle application demandée A$_{k+1}$ et du mode de modulation utilisé pour communiquer avec le noeud mobile NM$_{i+p}$ demandeur de cette nouvelle application. Le mode de modulation correspond au paramètre NM_M du tableau 2.

Ainsi, le module de discrimination MDS$_1$ permet d'établir et connaît un ensemble de données comportant au moins une estimation de la nouvelle charge pour la nouvelle application demandée, l'identifiant du point d'accès PA$_j$ considéré appelé à supporter cette nouvelle charge, la charge spécifique du canal de diffusion radio devant supporter cette nouvelle charge, le type d'application utilisé pour transmettre cette nouvelle application demandée et l'estimation du niveau de charge du point d'accès pour le type d'application demandée.

Le module de contrôle MDS comporte enfin un module logique MDS$_3$ d'interprétation de règles de priorité internes PR associées pour chaque type d'application et de calcul de décision d'autorisation respectivement de refus de la diffusion de la nouvelle application demandée en fonction du taux de charge et/ou de la charge canal et du taux de charge des types d'applications autorisés du point d'accès PA$_j$.

Sur réception par le serveur d'application SA d'une requête de diffusion d'une nouvelle application par un noeud mobile déterminé, la requête $RE_{(i+p,z)}$ de la figure 1, le serveur d'application SA exécute avec le module de contrôle de la diffusion de l'application demandée MDS, un protocole d'échange interactif de messages comportant au moins la transmission, par le serveur d'application SA vers le module de contrôle MDS, d'un message de requête d'autorisation de diffusion de la nouvelle application demandée. Le message de requête d'autorisation de diffusion contient au moins, outre un identifiant de message de requête RE, un identifiant du type de la nouvelle application demandée $S_k$ et une variable représentative du débit de transmission de données requis pour la diffusion de cette nouvelle application $R\_RS_k$. Les paramètres précités sont représentés au tableau 3.

Tableau 3

| | | |
|---|---|---|
| NM_Adresse | | Adresse réseau du NM demandant la nouvelle application |
| Identifiant message | REI | Identifie le message de requête |
| Application | $S_k$ | Application ou type d'application demandée par le NM |
| Débit_Service_Demandé | $R\_RS_k$ | Débit requis pour cette nouvelle application |
| *Débit Service acceptable* | | *Débit acceptable pour cette nouvelle application* |
| *Gigue Service demandée* | | *Gigue Service demandée pour cette nouvelle application* |
| *Gigue Service acceptable* | | *Gigue Service acceptable pour cette nouvelle application* |
| *Délai Service demandé* | | *Délai Service demandé pour cette nouvelle application* |
| *Délai Service acceptable* | | *Délai Service acceptable pour cette nouvelle application* |
| *Taux de perte paquet demandé* | | *Taux de perte paquet demandé pour cette nouvelle application* |
| *Taux de perte paquet acceptable* | | *Taux de perte paquet acceptable pour cette nouvelle application* |

Le message de requête d'autorisation de diffusion peut en outre comporter, ainsi que représenté au tableau précité en italique, un paramètre de débit acceptable pour la nouvelle application demandée, un paramètre de gigue d'application demandée pour cette nouvelle application, un paramètre de gigue d'application acceptable pour cette nouvelle application, un paramètre de délai de service demandé pour cette nouvelle application, un paramètre de délai d'application acceptable pour cette nouvelle application, un paramètre de taux de perte de paquets pour la nouvelle application demandée et un paramètre de taux de perte de paquets acceptable pour cette nouvelle application.

Le protocole d'échange interactif de messages entre le serveur d'application SA et le module de contrôle de la diffusion de l'application demandée MDS, comporte en outre la transmission, par le module de contrôle de la diffusion de l'application demandée MDS vers le serveur d'application SA, d'un message de réponse contenant au moins un identifiant du message de requête auquel répond ce message de réponse, c'est-à-dire l'identifiant REI du tableau 3 et une variable de réponse dont la vérification à la valeur vraie autorise la diffusion et dont l'absence de la vérification à la valeur vraie refuse la diffusion de la nouvelle application demandée par le serveur d'application SA.

Les paramètres précités sont représentés au tableau 4, dans lequel Re désigne le paramètre de réponse du module de décision DMS, la diffusion de l'application étant alors acceptée ou rejetée.

Tableau 4

| | | |
|---|---|---|
| NM_IP_Adresse | $NM\_A_i$ | Adresse réseau du NM demandant le nouveau service |
| Identifiant message | REMI | Identifie le message de requête auquel répond ce message |
| Réponse | Re | Réponse du Module Décision de *Service* : service accepté ou rejeté |
| *Débit Service souhaitable* | | *Débit souhaitable pour ce nouveau service* |
| *Gigue Service souhaitable* | | *Gigue souhaitable pour ce nouveau service* |
| *Délai Service souhaitable* | | *Délai souhaitable pour ce nouveau service* |
| *Taux de perte paquet souhaitable* | | *Taux de perte paquet souhaitable pour ce nouveau service* |

Le message de réponse précité peut comporter en outre, ainsi que représenté au tableau 4 en italique, un paramètre de débit de transmission souhaitable, de gigue souhaitable, de délai souhaitable et de taux de perte de paquet souhaitable pour la nouvelle application demandée.

Le fonctionnement du système de contrôle local de la diffusion d'une application au niveau d'un point d'accès à un réseau sans fil partagé, objet de la présente invention, est alors représenté ci-après.

En relation à la figure 3b précitée, le mode opératoire du système objet de l'invention est le suivant : le processus de fonctionnement consiste à faire remonter à partir du point d'accès $PA_j$ vers le module de calcul de charge MCC les informations suivantes :

- l'identification du point d'accès ;

- les adresses réseau des noeuds mobiles connectés et le débit radio de chaque mobile connecté ;

- le débit moyen par type d'application utilisé entre le point d'accès et les noeuds mobiles ;

- la période utilisée pour la mesure de ce débit ;

- et bien entendu les mesures de débit par type d'application.

Le module de calcul de la charge MCC peut alors en déduire le taux de charge du point d'accès $PA_j$ considéré par type d'application $A_k$.

Le module de contrôle de diffusion MDS en fonction de la charge précitée et de règles de priorité associées à chaque type d'application $A_k$ est alors en mesure de définir, pour une nouvelle application demandée par un noeud mobile, si celui-ci est accepté ou non sur le point d'accès $PA_j$ considéré.

Pour mettre en oeuvre le mode opératoire précité, le protocole d'échange de messages entre les différents éléments du système objet de l'invention, tel que représenté en figure 3b peut être le suivant :

1) Périodiquement le point d'accès $PA_j$ fournit au module de calcul de charge MCC des informations relatives au type d'application qui transite par le point d'accès $PA_j$. Ceci ce traduit par exemple par des mesures réseau ou radio relatives à des files d'attente présentes dans le point d'accès, les files d'attente précitées comportant par exemple les références des types d'applications successivement demandées.

2) Le module de calcul de charge MCC actualise la base de données $DB_s$ en fournissant des informations communiquées par les points d'accès $PA_j$. A partir des informations précitées et d'informations localement disponibles, telles que par exemple des règles de priorité PR définies par l'opérateur réseau lors de la configuration des points d'accès, le module de calcul de charge MCC calcule et transmet dans la base de données des estimations de taux de charge du point d'accès par type d'application. Les informations disponibles localement permettent par exemple d'établir la correspondance entre les types d'application, types tels qu'application en temps réel, application non en temps réel, et les files d'attente des points d'accès.

3) Lors de la réception d'une demande de service, le serveur d'application vient interroger le module de contrôle de diffusion MDS pour savoir si le point d'accès PAj sur lequel est connecté le client, c'est-à-dire le terminal $NM_{i+p}$ demandant la nouvelle application, a la possibilité de transmettre cette nouvelle application.

Le serveur d'applications SA passe dans sa requête des informations permettant d'identifier le terminal ou noeud mobile demandeur $NM_{i+p}$ et de caractériser le type d'application.

4) Le module de contrôle de diffusion MDS consulte l'état de charge par type de service du point d'accès $PA_j$ sur lequel est connecté le terminal demandeur $NM_{i+p}$. Ce point d'accès est connu grâce à la correspondance biunivoque identifiant point d'accès $PA_j$ / identifiant réseau du noeud mobile $NM\_A_i$ contenue dans la base de données $BD_s$. Par son algorithme de décision interne, le module de contrôle de diffusion MDS rend un arbitrage autorisant ou non la diffusion de l'application et du service demandé.

5) La réponse du module de contrôle de diffusion MDS est alors retournée au serveur d'application SA.

En pratique, on indique que la mise en oeuvre du procédé et du système objets de la présente invention est basée sur le protocole IPv4 d'échange de messages entre entités constitutives du système précité, ces entités étant bien entendu connectées en réseau et le protocole de gestion de points d'accès en réseau sans fil partagé du type 802.11e.

Le module de calcul de charge de service MCC et le module de contrôle de diffusion MDS forment un ensemble de scripts exécutés par un serveur.

En particulier, le module de contrôle de diffusion comporte un module logiciel ou de programme d'interprétation de règles de priorité interne associées à chaque type d'application exécutable et de calcul de décision d'autorisation respectivement de refus, en fonction du taux de charge d'un point d'accès, de la diffusion d'une application demandée.

Le point d'accès $PA_j$ et le module de calcul de charges MCC communiquent par l'intermédiaire du protocole SNMP par exemple.

Le serveur d'application SA et le module de contrôle de diffusion communiquent de manière avantageuse via le protocole RADIUS par exemple.

Les différents protocoles précités ne seront pas décrits en détail car ils appartiennent à l'état de la technique,

Enfin, en référence à la figure 4, on indique qu'afin de permettre la mise en oeuvre du procédé et du système objets de l'invention, tout point d'accès PA$_j$ est muni d'un microprocesseur 1 et d'organes d'entrée sortie 2, 3 de type IP et radio, ainsi que d'une mémoire de travail RAM 4a et d'une mémoire de programme PROG 4b. L'ensemble constitue des ressources de mesure mmj, de mémorisation et de transmission de valeurs de mesure de débit par type d'application et de la moyenne de débits radio $\overline{M\_PA}$ par type d'application vers la base de données DBs.

## Revendications

1. Procédé de contrôle local de la diffusion d'une application au niveau d'un point d'accès à un réseau sans fil partagé, auquel est connecté au moins un noeud mobile, repéré par une adresse réseau, **caractérisé en ce qu'**il consiste, pour ledit point d'accès, à :

   - estimer un débit moyen de données par type d'application et utilisé entre ledit point d'accès et ledit au moins un noeud mobile en fonction d'une mesure (A) d'un débit de données transmises par type d'application ;
   - calculer (B) une estimation d'un taux d'occupation temporelle d'un canal radio de ce point d'accès par type d'application, à partir d'au moins le débit moyen par type d'application ;
   - autoriser (F) respectivement refuser (G) la diffusion d'une nouvelle application sur ce point d'accès, à partir de règles de priorité associées à chaque type d'application, en fonction de ladite estimation du taux d'occupation temporelle du canal radio de ce point d'accès pour le type de ladite nouvelle application dont la diffusion est demandée sur ce point d'accès,

   chaque type d'application étant susceptible d'être diffusé vers ledit au moins un noeud mobile par l'intermédiaire du point d'accès.

2. Procédé selon la revendication 1, **caractérisé en ce que** la mesure (A) du débit de données transmises par type d'application est effectuée périodiquement au niveau dudit point d'accès, par discrimination des types d'applications et des types de données qui transitent par ledit point d'accès.

3. Procédé selon la revendication 2, **caractérisé en ce que** la mesure (A) du débit de données transmises par type d'application est transmise pour l'opération de calcul d'estimation du taux d'occupation temporelle du canal radio de ce point d'accès par type d'application, sous forme de messages successifs comportant au moins :

   - un champ d'identifiant unique dudit point d'accès dans la zone locale ;
   - un champ représentatif de la période de mesure ;
   - un champ représentatif, pour chaque canal radio utilisé, de l'estimation du niveau d'utilisation dudit canal radio pendant ladite période de mesure,

4. Procédé selon la revendication 3, **caractérisé en ce que**, pour chaque noeud mobile connecté audit point d'accès, lesdits messages successifs comportent en outre :

   - un champ représentatif de l'adresse réseau du noeud mobile connecté audit point d'accès ;
   - un champ représentatif du mode de modulation utilisée par ledit point d'accès lors de sa dernière communication avec ledit noeud mobile.

5. Procédé selon l'une des revendications 3 ou 4, **caractérisé en ce que** pour chaque type d'application, lesdits messages successifs comportent en outre :

   - un champ d'identifiant de type d'application ;
   - un champ représentatif de la moyenne des modulations utilisées par ledit point d'accès pendant la période de mesure ;
   - un champ représentatif du nombre total de paquets envoyés aux noeuds mobiles pour ce type d'application pendant la période de mesure ;
   - un champ représentatif du nombre total de paquets reçus depuis les noeuds mobiles pour ce type d'application pendant la période de mesure ;

- un champ représentatif du nombre total d'octets envoyés auxdits noeuds mobiles pour ce type d'application pendant la période de mesure ;
- un champ représentatif du nombre total d'octets reçus depuis lesdits noeuds mobiles pour ce type d'application pendant la période de mesure.

**6.** Procédé selon l'une des revendications 3 à 5, **caractérisé en ce que** l'étape consistant à calculer (B) l'estimation du taux d'occupation temporelle du canal radio de ce point d'accès par type d'application comprend :

- l'appel de données pré-requises mémorisées comportant au moins des temps moyens de transmission radio par type d'application et la taille moyenne des paquets pour assurer la diffusion dudit type d'application, et
- le calcul effectif et la mémorisation d'une valeur d'estimation du taux d'occupation temporelle du canal radio de ce point d'accès par type d'application pour la dernière période de mesure, à partir au moins de l'identifiant dudit point d'accès, de la moyenne des modulations utilisées par ledit point d'accès pendant la période de mesure et de la période de mesure définie comme la durée permettant de prendre des mesures significatives de débit.

**7.** Procédé selon la revendication 6, **caractérisé en ce que**, pour chaque noeud mobile, l'étape de calcul effectif et de mémorisation d'une valeur d'estimation du taux d'occupation temporelle du canal radio de ce point d'accès par type d'application comprend la mémorisation et la lecture du mode de modulation utilisé par ledit point d'accès lors de sa dernière communication avec ledit noeud mobile.

**8.** Procédé selon l'une des revendications 6 ou 7, **caractérisé en ce que** pour chaque type d'application, l'étape de calcul effectif et de mémorisation d'une valeur d'estimation du taux d'occupation temporelle du canal radio de ce point d'accès par type d'application comprend la mémorisation et la lecture de :

- l'identifiant de type d'application ;
- la valeur d'estimation du niveau de charge dudit point d'accès pendant la dernière période de mesure pour ledit type d'application ;
- un indicateur de variation de la charge dudit point d'accès entre la dernière période de mesure et la période de mesure précédente ;
- une valeur d'estimation du niveau de charge total dudit point d'accès pour l'ensemble des applications diffusées pendant la dernière période de mesure ;
- un indicateur de variation de la charge totale des services entre la dernière période de mesure et la période de mesure précédente ;
- le nombre de noeuds mobiles connectés audit point d'accès ;
- la date de la période de mesure, et pour chaque canal de diffusion utilisé ;
- une estimation du niveau d'utilisation dudit canal de diffusion pendant la dernière période de mesure ;
- un indicateur de variation de la charge dudit canal de diffusion entre la dernière période de mesure et la mesure précédente.

**9.** Système de contrôle local d'une diffusion d'une application au niveau d'un point d'accès à un réseau sans fil partagé, auquel est connecté au moins un noeud mobile, repéré par une adresse réseau, ledit réseau comportant un serveur d'applications permettant de diffuser une pluralité d'applications sollicitées sur requête par un noeud mobile, chaque point d'accès étant interconnecté au réseau coeur dudit réseau et audit serveur d'applications, **caractérisé en ce que** ledit système de contrôle comprend au moins interconnectés audit serveur d'applications et auxdits points d'accès :

- une base de données d'applications, contenant un ensemble de données relatives auxdites applications et auxdits points d'accès ;
- un moyen de calcul, pour ledit point d'accès, d'une estimation d'un taux d'occupation temporelle d'un canal radio par type d'application à partir d'au moins un débit moyen par type d'application et utilisé entre le point d'accès et ledit au moins un noeud mobile, en fonction d'une mesure (A) d'un débit de données transmises par type d'application, interconnecté à ladite base de données d'applications, ledit moyen de calcul de l'estimation du taux d'occupation temporelle du canal radio par type d'application permettant la collecte et la transmission de données relatives aux applications et la mise à jour de ladite base de données d'applications à partir de ces dernières ;
- des moyens de contrôle, pour ledit point d'accès, de la diffusion de l'application demandée en relation avec ledit serveur d'applications et permettant d'assurer le contrôle de la diffusion, par autorisation respectivement refus de la diffusion de l'application demandée sur le point d'accès, à partir de règles de priorité associées à chaque type d'application, en fonction de l'estimation du taux d'occupation temporelle du canal radio pour le type de l'application demandée et/ou de la variation de l'estimation du taux d'occupation temporelle du canal radio dudit point d'accès pour le type de l'application demandée

chaque type d'application étant susceptible d'être diffusé vers ledit au moins un noeud mobile par l'intermédiaire du point d'accès.

10. Système selon la revendication 9, **caractérisé en ce que** lesdits points d'accès comportent des moyens de mesure et de collecte de données relatives à la diffusion radio et à chaque application susceptible d'être diffusée par le canal radio correspondant.

11. Système selon l'une des revendications 9 ou 10, **caractérisé en ce que** lesdits moyens de contrôle de la diffusion de l'application demandée comportent au moins :

- des moyens de discrimination, à partir de données contenues dans ladite base de données d'applications, en fonction de l'adresse réseau dudit noeud mobile, du point d'accès auquel ledit noeud mobile est connecté et du mode de modulation utilisée par ledit point d'accès lors de sa dernière communication avec ledit noeud mobile ;
- des moyens de calcul numérique d'une valeur d'estimation de la charge ajoutée par la nouvelle application demandée, ladite valeur d'estimation de la charge ajoutée étant calculée en raison du débit de dIffusion requis pour ladite nouvelle application demandée et du mode de modulation utilisée pour communiquer avec ledit noeud mobile, lesdits moyens de discrimination permettant d'établir un ensemble de données comportant au moins :

  ◦ une estimation de la nouvelle charge pour la nouvelle application demandée,
  ◦ l'identifiant du point d'accès considéré appelé à supporter cette nouvelle charge,
  ◦ la charge spécifique du canal de diffusion radio devant supporter cette nouvelle charge,
  ◦ le type d'application utilisée pour transmettre cette nouvelle application demandée,
  ◦ l'estimation du niveau de charge dudit point d'accès pour le type d'application demandée,

- des moyens logiques d'interprétation de règles de priorité interne associées pour chaque type d'application et de calcul de décision d'autorisation respectivement de refus, en fonction de l'estimation du taux d'occupation temporelle du canal radio par type d'application dudit point d'accès et/ou de la charge canal et de l'estimation du taux d'occupation temporelle du canal radio des types d'application autorisés, de la diffusion de la nouvelle application demandée.

12. Système selon l'une des revendications 9 à 11, **caractérisé en ce que** sur réception par ledit serveur d'applications d'une requête de diffusion d'une nouvelle application par un noeud mobile déterminé, ledit serveur d'applications exécute avec lesdits moyens de contrôle de la diffusion de l'application demandée un protocole d'échange interactif de messages, comportant au moins :

- la transmission, par ledit serveur d'applications vers lesdits moyens de contrôle de la diffusion de l'application demandée, d'un message de requête d'autorisation de diffusion de ladite nouvelle application demandée, contenant au moins, outre un identifiant de message de requête, un identifiant du type de la nouvelle application demandée et une variable représentative du débit de transmission de données requis pour la diffusion de cette nouvelle application ;
- la transmission, par lesdits moyens de contrôle de la diffusion de l'application demandée vers ledit serveur d'applications, d'un message de réponse contenant au moins un identifiant dudit message de requête auquel répond ce message de réponse et une variable de réponse dont la vérification à la valeur vraie autorise la diffusion, et dont l'absence de vérification à la valeur vraie refuse la diffusion, de ladite nouvelle application demandée par ledit serveur d'applications.

13. Produit programme informatique comportant des instructions pour la mise en oeuvre du procédé selon l'une des revendications 1 à 8, lorsque ce programme est exécuté par un processeur.

**Patentansprüche**

1. Verfahren zum lokalen Steuern der Verteilung einer Anwendung an einem Zugriffspunkt an ein gemeinsames drahtloses Netz, mit dem wenigstens ein mobiler Knoten, **gekennzeichnet durch** eine Netzadresse, verbunden ist, **dadurch** gekennzeichnet, dass es für den Zugriffspunkt umfasst:

   - das Schätzen eines mittleren Datendurchsatzes nach Anwendungstyp, der zwischen dem Zugriffspunkt und dem wenigstens einen mobilen Knoten verwendet wird, entsprechend einer Messung (A) eines Durchsatzes von übertragenen Daten nach Anwendungstyp;
   - das Berechnen (B) einer Schätzung einer zeitlichen Auslastung eines Funkkanals dieses Zugriffspunkts nach Anwendungstyp aus wenigstens dem mittleren Durchsatz nach Anwendungstyp;
   - Genehmigen (F) bzw. Verweigern (G) der Verteilung einer neuen Anwendung auf diesem Zugriffspunkt aufgrund von jedem Anwendungstyp zugewiesenen Prioritätsregeln entsprechend der Schätzung der zeitlichen Auslastung des Funkkanals dieses Zugriffspunkts für den Typ der neuen Anwendung, deren Verteilung auf diesem Zugriffspunkt angefordert wird,

   wobei jeder Anwendungstyp zum wenigstens einen mobilen Knoten über den Zugriffspunkt verteilt werden kann.

2. Verfahren nach Anspruch 1, **dadurch gekennzeichnet, dass** die Messung (A) des Durchsatzes von übertragenen Daten nach Anwendungstyp periodisch am Zugriffspunkt durch Unterscheidung der Anwendungstypen und Datentypen, die den Zugriffspunkt passieren, erfolgt.

3. Verfahren nach Anspruch 2, **dadurch gekennzeichnet, dass** die Messung (A) des Durchsatzes von übertragenen Daten nach Anwendungstyp zur Durchführung der Berechnung der Schätzung der zeitlichen Auslastung des Funkkanals dieses Zugriffspunkts nach Anwendungstyp in der Form von aufeinanderfolgenden Nachrichten erfolgt, umfassend wenigstens:

   - ein Feld einer eindeutigen Identifikation des Zugriffspunkts im lokalen Bereich;
   - ein repräsentatives Feld für den Messzeitraum;
   - ein repräsentatives Feld für die Schätzung der Auslastung des Funkkanals während des Messzeitraums für jeden verwendeten Funkkanal.

4. Verfahren nach Anspruch 3, **dadurch gekennzeichnet, dass** für jeden mit dem Zugriffspunkt verbundenen mobilen Knoten die aufeinanderfolgenden Nachrichten ferner umfassen:

   - ein repräsentatives Feld für die Netzadresse des mit dem Zugriffspunkt verbundenen mobilen Knotens;
   - ein repräsentatives Feld für den vom Zugriffspunkt bei der letzten Kommunikation mit dem mobilen Knoten verwendeten Modulationsmodus.

5. Verfahren nach Anspruch 3 oder 4, **dadurch gekennzeichnet, dass** für jeden Anwendungstyp die aufeinanderfolgenden Nachrichten ferner umfassen:

   - ein Identifikationsfeld des Anwendungstyps;
   - ein repräsentatives Feld für den Durchschnitt der vom Zugriffspunkt während des Messzeitraums verwendeten Modulationen;
   - ein repräsentatives Feld für die Gesamtzahl von an die mobilen Knoten für diesen Anwendungstyp während des Messzeitraums gesendeten Paketen;
   - ein repräsentatives Feld der Gesamtzahl von von den mobilen Knoten für diesen Anwendungstyp während des Messzeitraums empfangenen Paketen;
   - ein repräsentatives Feld für die Gesamtzahl von an die mobilen Knoten für diesen Anwendungstyp während des Messzeitraums gesendeten Bytes;
   - ein repräsentatives Feld für die Gesamtzahl von von den mobilen Knoten für diesen Anwendungstyp während des Messzeitraums empfangenen Bytes.

6. Verfahren nach einem der Ansprüche 3 bis 5, **dadurch gekennzeichnet, dass** der Schritt zum Berechnen (B) der Schätzung der zeitlichen Auslastung des Funkkanals dieses Zugriffspunkts nach Anwendungstyp umfasst:

   - das Abrufen von gespeicherten erforderlichen Daten umfassend wenigstens Durchschnittszeiten der Funkübertragung nach Anwendungstyp und die Durchschnittsgröße der Pakete zum Gewährleisten der Verteilung des Anwendungstyps, und

- das effektive Berechnen und das Speichern eines Schätzwerts der zeitlichen Auslastung des Funkkanals dieses Zugriffspunkts nach Anwendungstyp für den letzten Messzeitraum aus wenigstens der Identifikation des Zugriffspunkts, dem Durchschnitt der vom Zugriffspunkt während des Messzeitraums verwendeten Modulationen und des als die das Vornehmen der signifikanten Messungen des Durchsatzes ermöglichende Dauer definierten Messzeitraums.

7. Verfahren nach Anspruch 6, **dadurch gekennzeichnet, dass** für jeden mobilen Knoten der Schritt zum effektiven Berechnen und Speichern eines Schätzwerts der zeitlichen Auslastung des Funkkanals dieses Zugriffspunkts nach Anwendungstyp das Speichern und Lesen des vom Zugriffspunkt bei der letzten Kommunikation mit dem mobilen Knoten verwendeten Modulationsmodus umfasst.

8. Verfahren nach Anspruch 6 oder 7, **dadurch gekennzeichnet, dass** für jeden Anwendungstyp der Schritt zum effektiven Berechnen und Speichern eines Schätzwerts der zeitlichen Auslastung des Funkkanals dieses Zugriffspunkts nach Anwendungstyp das Speichern und Lesen umfasst von:

- der Identifikation des Anwendungstyps;
- dem Schätzwert der Belastung des Zugriffspunkts während des letzten Messzeitraums für den Anwendungstyp;
- einem Indikator der Variation der Last des Zugriffspunkts zwischen dem letzten Messzeitraum und dem vorhergehenden Messzeitraum;
- einem Schätzwert der gesamten Belastung des Zugriffspunkts für alle während des letzten Messzeitraums verteilten Anwendungen;
- einem Indikator der Variation der gesamten Last der Dienste zwischen dem letzten Messzeitraum und dem vorhergehenden Messzeitraum;
- der Zahl von mit dem Zugriffspunkt verbundenen mobilen Knoten;
- dem Datum des Messzeitraums für jeden verwendeten Verteilungskanal;
- einer Schätzung der Auslastung des Verteilungskanals während des letzten Messzeitraums;
- einem Indikator der Variation der Last des Zugriffspunkts zwischen dem letzten Messzeitraum und der vorhergehenden Messung.

9. System zum lokalen Steuern einer Verteilung einer Anwendung an einem Zugriffspunkt an ein gemeinsames drahtloses Netz, mit dem wenigstens ein mobiler Knoten, **gekennzeichnet durch** eine Netzadresse, verbunden ist, wobei das Netz einen das Verteilen einer Vielzahl von von einem mobilen Knoten angeforderten Anwendungen ermöglichenden Anwendungsserver umfasst, wobei jeder Zugriffspunkt mit dem Kernnetz des Netzes und mit dem Anwendungsserver verbunden ist, **dadurch** gekennzeichnet, dass das System zum Steuern wenigstens mit dem Anwendungsserver und den Zugriffspunkten verbunden umfasst:

- eine eine Datei für die Anwendungen und die Zugriffspunkte enthaltende Anwendungsdatenbank;
- ein Mittel zum Berechnen einer Schätzung einer zeitlichen Auslastung eines Funkkanals für den Zugriffspunkt nach Anwendungstyp für den Zugriffspunkt aus wenigstens einem mittleren Durchsatz nach Anwendungstyp, der zwischen dem Zugriffspunkt und dem wenigstens einen mobilen Knoten verwendet wird, entsprechend einer Messung (A) eines Durchsatzes von übertragenen Daten nach Anwendungstyp, verbunden mit der Anwendungsdatenbank, wobei das Mittel zum Berechnen der Schätzung der zeitlichen Auslastung des Funkkanals nach Anwendungstyp das Sammeln und Übertragen von Daten zu den Anwendungen und das Aktualisieren der Anwendungsdatenbank aus letzteren ermöglicht;
- Mittel zum Steuern der Verteilung der angeforderten Anwendung für den Zugriffspunkt in Bezug auf den Anwendungsserver, die das Gewährleisten der Steuerung ermöglichen, **durch** Genehmigung bzw. Verweigerung der Verteilung der angeforderten Anwendung am Zugriffspunkt aufgrund von jedem Anwendungstyp zugewiesenen Prioritätsregeln entsprechend der Schätzung der zeitlichen Auslastung des Funkkanals für den Typ der angeforderten Anwendung und/oder der Variation der Schätzung der zeitlichen Auslastung des Funkkanals des Zugriffspunkts für den Typ der angeforderten Anwendung,

wobei jeder Anwendungstyp zum wenigstens einen mobilen Knoten über den Zugriffspunkt verteilt werden kann.

10. System nach Anspruch 9, **dadurch gekennzeichnet, dass** die Zugriffspunkte Mittel zum Messen und Sammeln von Daten zur Funkverteilung und zu jeder Anwendung, die über den entsprechenden Funkkanal verteilt werden kann, umfassen.

**11.** System nach Anspruch 9 oder 10, **dadurch gekennzeichnet, dass** die Mittel zum Steuern der Verteilung der angeforderten Anwendung wenigstens umfassen:

- Mittel zum Unterscheiden des Zugriffspunkts, mit dem der mobile Knoten verbunden ist, und des vom Zugriffspunkt bei seiner letzten Kommunikation mit dem mobilen Knoten verwendeten Modulationsmodus aufgrund von in der Anwendungsdatenbank enthaltenen Daten entsprechend der Netzadresse des mobilen Knotens;
- Mittel zum numerischen Berechnen eines Schätzwerts der durch die angeforderte neue Anwendung hinzugefügten Last, wobei der Schätzwert der hinzugefügten Last aus dem für die angeforderte neue Anwendung erforderlichen Verteilungsdurchsatz und dem zum Kommunizieren mit dem mobilen Knoten verwendeten Modulationsmodus berechnet wird, wobei die Mittel zum Unterscheiden das Erstellen einer Datei ermöglichen, umfassend wenigstens:

  ◦ eine Schätzung der neuen Last für angeforderte neue Anwendung,
  ◦ die Identifikation des zum Aufnehmen dieser neuen Last vorgesehenen Zugriffspunkts,
  ◦ die spezifische Last des Funkverteilungskanals, der diese neue Last aufnehmen muss,
  ◦ der zum Übertragen dieser angeforderten neuen Anwendung verwendete Anwendungstyp,
  ◦ die Schätzung der Belastung des Zugriffspunkts für den angeforderten Anwendungstyp,

- logische Mittel zur internen Interpretation von verknüpften Prioritätsregeln für jeden Anwendungstyp und zur Berechnung einer Entscheidung über die Genehmigung bzw. Verweigerung der Verteilung der angeforderten neuen Anwendung entsprechend der Schätzung der zeitlichen Auslastung des Funkkanals nach Anwendungstyp des Zugriffspunkts und/oder der Kanallast und der Schätzung der zeitlichen Auslastung des Funkkanals der genehmigten Anwendungstypen.

**12.** System nach einem der Ansprüche 9 bis 11, **dadurch gekennzeichnet, dass** bei Empfang einer Anforderung der Verteilung einer neuen Anwendung über einen vorgegebenen mobilen Knoten durch den Anwendungsserver der Anwendungsserver mit den Mitteln zum Steuern der Verteilung der angeforderten Anwendung ein Protokoll zum interaktiven Austausch von Nachrichten ausführt, umfassend wenigstens:

- das Übertragen einer Nachricht der Anforderung einer Genehmigung der Verteilung der angeforderten neuen Anwendung vom Anwendungsserver zu den Mitteln zum Steuern der Verteilung der angeforderten Anwendung, umfassend, zusätzlich zu einer Identifikation der Anforderungsnachricht, wenigstens eine Identifikation des Typs der angeforderten neuen Anwendung und eine repräsentative Variable des für die Verteilung dieser neuen Anwendung erforderlichen Datenübertragungsdurchsatzes;
- das Übertragen einer Antwortnachricht umfassend wenigstens eine Identifikation der Anforderungsnachricht, auf die diese Antwortnachricht antwortet, und eine Antwortvariable, deren Verifizierung auf den wahren Wert die Verteilung genehmigt, und deren Fehlen der Verifizierung auf den wahren Wert die Genehmigung der vom Anwendungsserver angeforderten neuen Anwendung verweigert, durch die Mittel zum Steuern der Verteilung der angeforderten Anwendung an den Anwendungsserver.

**13.** Computerprogrammprodukt umfassend Anweisungen zum Durchführen des Verfahrens nach einem der Ansprüche 1 bis 8, wenn dieses Programm von einem Prozessor ausgeführt wird.

**Claims**

**1.** Method for locally controlling the broadcasting of an application at the level of an access point of a shared wireless network, to which is connected at least one mobile node, tagged by a network address, **characterized in that** it consists, for said access point, in:

- estimating an average throughput of data per type of application and used between said access point and said at least one mobile node, as a function of a measurement (A) of a throughput of data transmitted per type of application;
- calculating (B) an estimation of a temporal occupancy rate of a radio channel of this access point per type of application, on the basis of at least the average throughput per type of application;
- permitting (F) respectively denying (G) the broadcast of a new application on this access point, on the basis of priority rules associated with each type of application, as a function of said estimation of the temporal occupancy rate of the radio channel of this access point for the type of said new application, the broadcasting of which is requested on this access point,

each type of application being able to be broadcast to said at least one mobile node via the access point.

2. Method according to Claim 1, **characterized in that** the measurement (A) of the throughput of data transmitted per type of application is performed periodically at the level of said access point, by discriminating the types of applications and the types of data which travel through said access point.

3. Method according to Claim 2, **characterized in that** the measurement (A) of the throughput of data transmitted per type of application is transmitted for the estimation calculation operation of the temporal occupancy rate of the radio channel for this access point per type of application, in the form of successive messages comprising at least:

- a unique identifier field of said access point in the local zone;
- a field representative of the measurement period;
- a field representative, for each radio channel used, of the estimation of the level of use of said radio channel during said measurement period.

4. Method according to Claim 3, **characterized in that**, for each mobile node connected to said access point, said successive messages furthermore comprise:

- a field representative of the network address of the mobile node connected to said access point;
- a field representative of the modulation mode used by said access point during its last communication with said mobile node.

5. Method according to one of Claims 3 or 4, **characterized in that** for each type of application, said successive messages furthermore comprise:

- an application type identifier field;
- a field representative of the average of the modulations used by said access point during the measurement period;
- a field representative of the total number of packets dispatched to the mobile nodes for this type of application during the measurement period;
- a field representative of the total number of packets received from the mobile nodes for this type of application during the measurement period;
- a field representative of the total number of bytes dispatched to said mobile nodes for this type of application during the measurement period;
- a field representative of the total number of bytes received from said mobile nodes for this type of application during the measurement period.

6. Method according to one of Claims 3 to 5, **characterized in that** the step consisting in calculating (B) the estimation of the temporal occupancy rate of the radio channel of this access point per type of application comprises:

- the calling of stored pre-requested data comprising at least average radio transmission times per type of application and the average size of the packets so as to ensure the broadcasting of said type of application, and
- the actual calculation and the storage of an estimation value of the temporal occupancy rate of the radio channel of this access point per type of application for the last measurement period, on the basis at least of the identifier of said access point, of the average of the modulations used by said access point for the measurement period and of the measurement period defined as the duration making it possible to take significant throughput measurements.

7. Method according to Claim 6, **characterized in that**, for each mobile node, the step of actual calculation and storage of an estimation value of the temporal occupancy rate of the radio channel of this access point per type of application comprises the storage and the reading of the modulation mode used by said access point during its last communication with said mobile node.

8. Method according to one of Claims 6 or 7, **characterized in that** for each type of application, the step of actual calculation and storage of an estimation value of the temporal occupancy rate of the radio channel of this access point per type of application comprises the storage and the reading of:

- the application type identifier;
- the estimation value of the load level of said access point during the last measurement period for said type of application;
- an indicator of variation of the load of said access point between the last measurement period and the previous measurement period;
- an estimation value of the total load level of said access point for the set of applications broadcast during the last measurement period;
- an indicator of variation of the total load of the services between the last measurement period and the previous measurement period;
- the number of mobile nodes connected to said access point;
- the date of the measurement period, and for each broadcasting channel used;
- an estimation of the level of use of said broadcasting channel during the last measurement period;
- an indicator of variation of the load of said broadcasting channel between the last measurement period and the previous measurement.

9.  System for locally controlling broadcasting of an application at the level of an access point of a shared wireless network, to which is connected at least one mobile node, tagged by a network address, said network comprising an applications server making it possible to broadcast a plurality of applications invoked on request by a mobile node, each access point being interconnected to the core network of said network and to said applications server, **characterized in that** said control system comprises at least interconnected to said applications server and to said access points:

    - an applications database, containing a set of data relating to said applications and to said access points;
    - a means for calculating, for said access point, an estimation of a temporal occupancy rate of a radio channel per type of application, on the basis of at least an average throughput per type of application and used between the access point and said at least one mobile node, as a function of a measurement (A) of a throughput of data transmitted per type of application, interconnected to said applications database, said means for calculating the estimation of the temporal occupancy of the radio channel per type of application allowing the collection and the transmission of data relating to the applications and the updating of said applications database on the basis of the latter;
    - means for controlling, for said access point, the broadcasting of the application requested in conjunction with said applications server and making it possible to ensure the controlling of the broadcasting, by permission respectively denial of the broadcast of the application requested on the access point, on the basis of priority rules associated with each type of application, as a function of the estimation of the temporal occupancy rate of the radio channel for the type of application requested and/or of the variation in the estimation of the temporal occupancy rate of the radio channel of said access point, for the type of application requested,

    each type of application being able to be broadcast to said at least one mobile node via the access point.

10. System according to Claim 9, **characterized in that** said access points comprise means for measuring and collecting data relating to radio broadcasting and to each application able to be broadcast by the corresponding radio channel.

11. System according to one of Claims 9 or 10, **characterized in that** said means for controlling the broadcasting of the requested application comprise at least:

    - means for discriminating, on the basis of data contained in said applications database, as a function of the network address of said mobile node, the access point to which said mobile node is connected and the modulation mode used by said access point during its last communication with said mobile node;
    - means for numerically calculating an estimation value of the load added by the new requested application, said estimation value of the added load being calculated owing to the broadcasting throughput required for said new requested application and of the modulation mode used to communicate with said mobile node, said discriminating means making it possible to establish a set of data comprising at least:

        ◦ an estimation of the new load for the new requested application,
        ◦ the identifier of the access point considered called to support this new load,
        ◦ the specific load of the radio broadcasting channel having to support this new load,
        ◦ the type of application used to transmit this new requested application,
        ◦ the estimation of the load level of said access point for the type of application requested,

- logic means for interpreting associated rules of internal priority for each type of application and for calculating a decision of permission respectively denial, as a function of the estimation of the temporal occupancy rate of the radio channel per type of application of said access point and/or of the channel load and of the estimation of the temporal occupancy rate of the radio channel of the permitted types of application, of the broadcasting of the new requested application.

12. The system according to one of Claims 9 to 11, **characterized in that** on receipt by said applications server of a request for broadcasting a new application by a determined mobile node, said applications server executes with said means for controlling the broadcasting of the requested application an interactive message exchange protocol, comprising at least:

- the transmission, by said applications server to said means for controlling the broadcasting of the requested application, of a message requesting permission for broadcasting said new requested application, containing at least, in addition to a request message identifier, an identifier of the type of the new requested application and a variable representative of the data transmission throughput required for the broadcasting of this new application;
- the transmission, by said means for controlling the broadcasting of the requested application to said applications server, of a response message containing at least one identifier of said request message to which this response message responds and a response variable whose adoption of the value true permits the broadcasting, and whose absence of adoption of the value true denies the broadcasting, of said new application requested by said applications server.

13. Computer program product comprising instructions for implementing the method according to one of Claims 1 to 8, when this program is executed by a processor.

# FIG.1.

$$D\left(\overline{d_k}, PS_k\right)$$

# FIG.2a.

$$APPEL\left(\overline{d_k}, PS_k\right) \quad —B_1$$

$$PAj, \overline{M\_PA}, T \quad —B_{21}$$

$$\tau_k\left(\overline{M\_PA}\right) = g\left(D\left(\overline{d_k}, PS_k\right) PAj, \overline{M\_PA}, T\right) \quad —B_{22}$$

$B$

$B_2$

## FIG.4.

2

$\mu P$ — 1

RAM — 4a

PROG — 4b

$\begin{array}{c} O \\ I \end{array}$

3 $\begin{array}{c} I \\ O \end{array}$

mmj

RE(i+p, z)

$TS\_S\_C + N\_S\_C > S1$
OU
$C\_C + N\_S\_C > S2$

E0

$\overline{NON}$

E1 AUTORISATION

OUi

E2 T_S ?

VOiX

E4 SUiTE T_S = VOiX

BCKG
B_E

E3 AUTORISATION

VIDÉO

$BCKG\_TS\_C$
$+ B\_E\_TS\_C$
$> N\_S\_C$

E5

NON

E6 REFUS

$BCKG\_TS\_C$
$+ B\_E\_TS\_C$
$- N\_S\_C > S3$

E7

NON

E8 REFUS

OUi

E9 AUTORISATION

E

FIG.2b.

FIG.3b.

FIG.3a.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03047296 A
- WO 03007115 A
- US 2004158644 A1

**Littérature non-brevet citée dans la description**

- Wireless access server for quality of service and location based access control in 802.11 networks. **GARG S et al.** COMPUTERS AND COMMUNICATIONS, 2002. PROCEEDINGS. ISCC 2002. SEVENTH INTERNATIONAL SYMPOSIUM. IEEE, 01 Juillet 2002, 819-824